# EUROPÄISCHE PATENTSCHRIFT

(11) **EP 0 904 579 B1**
(45) Veröffentlichungstag und Bekanntmachung des Hinweises auf die Patenterteilung: **17.10.2001**
(21) Anmeldenummer: 97923931.6
(22) Anmeldetag: 17.05.1997
(51) Int. Cl.: G07C 5/08

(54) **Vorrichtung zur Anzeige von Warn- oder Fehlersignalen**
Apparatus for indicating warning or error signals
Dispositif pour signaler des avertissements ou défauts

(30) Priorität: 31.05.1996 DE 19621941
(43) Veröffentlichungstag der Anmeldung: 31.03.1999
(73) Patentinhaber: DaimlerChrysler AG, 70567 Stuttgart (DE)
(72) Erfinder: CHARZINSKI, Uwe, D-70378 Stuttgart (DE); HORWATH, Jochen, D-72669 Unterensingen (DE); MÜLLER, Hartwig, D-70190 Stuttgart (DE); RICKLEFS, Gerald, D-71394 Kernen (DE); SCHEURER, Friedrich, D-73760 Ostfildern (DE)
(74) Vertreter: Dahmen, Toni Dipl.-Ing.
(86) Internationale Anmeldenummer: EP9702537
(87) Internationale Veröffentlichungsnummer: WO9746977

(56) Entgegenhaltungen:
- EP-A- 0 005 436
- EP-A- 0 072 000
- EP-A- 0 308 944
- DE-A- 2 854 302
- DE-A- 3 032 484
- DE-A- 3 121 645
- US-A- 4 447 801
- US-A- 5 006 829

## Beschreibung

Die Erfindung betrifft eine Anzeigevorrichtung für Systeme, insbesondere eines Kraftfahrzeuges, die bei vorgegebenen Betriebszuständen und/oder Abweichungen von einem Sollbetriebszustand ein Warn- bzw. Fehlersignal erzeugen, mit einer der Anzeigevorrichtung vorgeschalteten Steuervorrichtung, die die vorgenannten Warn- bzw. Fehlersignale speichert.

Anzeigevorrichtungen bzw. Fehleranzeigen sind in Kraftfahrzeugen allgemein gebräuchlich. Beispielhaft kann auf Verschleißanzeigen für Bremsbeläge hingewiesen erden. Dabei wird immer dann ein Signallicht od.dgl. eingeschaltet, sobals einer der Bremsbeläge der Fahrzeugbetriebsbremse eine vorgegebene Dicke unterschreitet.

Des weiteren können Kraftfahrzeuge mit Überwachungsvorrichtungen ausgerüstet sein, die regelmäßig vorgegebene Systeme des Kraftfahrzeuges auf den jeweiligen Betriebszustand bzw. auf Fehlersignale abfragen und entsprechende Daten langfristig speichern. Mit einer gesonderten Abfrageeinheit können dann diese Daten angezeigt bzw. in Fehlersignale umgesetzt werden. Außerdem kann bei Auftreten eines Fehlers sofort eine Anzeige betätigt werden. Entsprechende Anordnungen sind Gegenstand der DE 32 29 411 A1.

Aus der DE 31 21 645 C2 ist es bekannt, rechnergestützte Steuersysteme, die unter anderem zur Motorsteuerung bzw. zur Zündsteuerung des Motors dienen, auch zur Überwachung verschiedener Fahrzeugsysteme heranzuziehen und dabei Zustandsdaten bzw. Fehlersignale zu speichern. Auf diese Weise kann die Arbeitskapazität der Steuersysteme auch für Diagnosezwecke herangezogen werden, d.h. die Diagnoseabfragen können in den Pausen zwischen den Steuermaßnahmen durchgeführt werden.

Die DE 39 02 339 A1 bezieht sich auf die Datenerfassung in einem batteriegetriebenen Elektrofahrzeug. Hier werden alle Daten des Fahrzeuges und der Batterie in einem Informationsprozessor und -speicher gesammelt und verarbeitet und von dort auf ein Datenauswertegerät übertragen.

Die DE-Druckschrift von B. Eberwein, W. Dörks "Onboard-Diagnose - Ein Weg zu höherer Fahrzeugverfügbarkeit" in "nahverkehrs-praxis" Nr. 9/1995, Seiten 268 bis 270, bezieht sich allgemein auf die Zweckmäßigkeit von automatischen Diagnosesystemen in Fahrzeugen. Dadurch kann die Wartung einer Fahrzeugflotte wesentlich vereinfacht werden.

Die EP 0 308 944 A2 beschreibt eine Fehlerdiagnoseeinrichtung für ein Fahrzeugsteuerungssystem. Dabei werden Fehlermeldungen gespeichert und vor Reparatur- oder Wartungsarbeiten abgerufen. In diesem Zusammenhang wird in der EP 0 308 944 A2 das Problem behandelt, eine Anzeige irrtümlich gespeicherter Fehlerinformationen zu verhindern. Zu diesem Zweck wird vorgeschlagen, die Anzeige einer Fehlerinformation zu unterdrükken, wenn sich die Fehlermeldung nicht innerhalb einer vorgegebenen Zeitspanne wiederholt. Jedoch können auch unterdrückte Fehlerinformationen wieder angezeigt werden, um beispielsweise einer Werkstatt die Diagnosearbeit zu erleichtern. Sobald der Motor des Fahrzeuges (über den Zündschalter) stillgesetzt wird, wird der Betrieb des Fahrzeugsteuerungssystems sowie der Fehlerdiagnoseeinrichtung eingestellt.

Die US-A 4 447 801 steht im Zusammenhang mit einem Diagnosesystem, welches mit dem Einschalten der Zündung eines Fahrzeugmotors entsprechende Warnanzeigen aufleuchten läßt, wenn ein Fehler festgestellt wird. In diesem Zusammenhang wird das Problem erörtert, daß ein Fahrer typischerweise dazu neigt, solche Warnanzeigen zu vernachlässigen, weil Anzeigen in zu großer Zahl gleichzeitig aufleuchten. Zur Ausräumung dieses Problems werden in der US-A 4 447 801 verschiedene Ansätze aufgezeigt:

Die Warnanzeigen können generell geprüft werden, bevor das Fahrzeug in Betrieb gesetzt wird.

Darüber hinaus können die Warnanzeigen vor Betriebsaufnahme des Fahrzeuges nacheinander geprüft werden.

Außerdem können die Warnanzeigen bei Betriebsaufnahme des Fahrzeuges gleichzeitig eingeschaltet und dann nacheinander abgeschaltet werden.

Schließlich können die Warnanzeigen auf Anforderung des Fahrers nacheinander aktiviert werden.

In jedem Falle können sich die Warnanzeigen auf Zustandsgrößen beziehen, die vom Lauf des Fahrzeugmotors unabhängig sind.

Aufgabe der Erfindung ist es nun, eine vorteilhafte Anzeigevorrichtung zu schaffen, bei der unnötige Irritationen der die Anzeigevorrichtung überwachenden Person bzw. des Fahrers eines Kraftfahrzeuges besonders sicher vermieden werden.

Diese Aufgabe wird erfindungsgemäß bei einer Anzeigevorrichtung der eingangs angegebenen Art dadurch gelöst, daß die Steuereinrichtung die Anzeigevorrichtung bei Erhalt eines bei einer Betriebsabschaltung des überwachten Systems oder Kraftfahrzeuges erzeugten Ausschaltsignales zumindest vorübergehend betätigt.

Die Erfindung beruht auf dem allgemeinen Gedanken, Betriebszustände, die erst mit größerer zeitlicher Verzögerung Maßnahmen erforderlich oder wünschenswert machen, erst bei einer Betriebsbeendigung anzuzeigen, so daß im Beispiel eines Kraftfahrzeuges der Fahrer während der Fahrt nur wirklich wichtige Signale angezeigt erhält. Auf diese Weise wird berücksichtigt, daß es in der Regel erwünscht ist, in einem Fahrzeug vielfältige Systeme und Funktionen zu überwachen, daß aber die damit verbundenen Signalanzeigen, wenn sie "zur Unzeit" auftreten, den Fahrer irritieren können. Gleichzeitig wird berücksichtigt, daß eine ständig auftretende Signalanzeige vom Fahrer leicht unbeachtet bleiben kann.

Bei der Erfindung ist vorteilhafterweise durch die Betätigung der Anzeigevorrichtung bei einer Betriebsabschaltung in besonderem Maße gewährleistet, daß die Anzeige mit Aufmerksamkeit registriert wird.

Die Erfindung bietet den Vorzug, daß gegebenenfalls sehr vielfältige Funktionen überwacht und Signale auch dann erzeugt werden können, wenn keinerlei unmittelbarer Handlungsbedarf besteht. Denn während des Betriebes können aufgrund der Erfindung die Signale nicht zu einer Irritation des Betreibers oder Fahrers führen.

Hierbei wird auch berücksichtigt, daß viele Systeme redundant ausgelegt sind, so daß kleinere Fehlfunktionen von Untersystemen an sich unbedenklich sind, gleichwohl aber erkennbar werden sollten, um in jedem Falle innerhalb angemessener Zeit Vorsorgemaßnahmen treffen zu können.

Gegebenenfalls kann gemäß einer vorteilhaften Ausführungsform der Erfindung auch vorgesehen sein, die Anzeigevorrichtung bzw. Fehleranzeige bei Auftreten eines entsprechenden Signales auch während des Betriebes des jeweiligen Systems kurzzeitig und bei Betriebsabschaltung erneut zu betätigen.

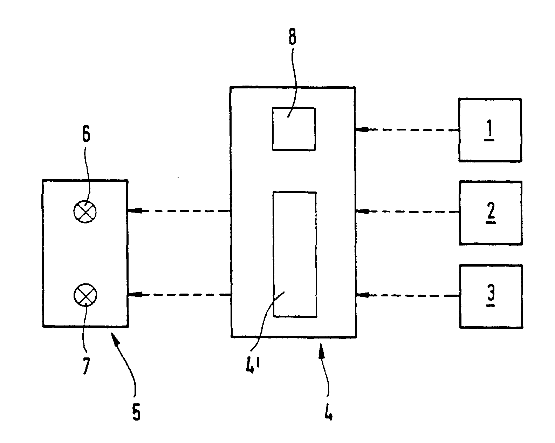

Im übrigen wird hinsichtlich vorteilhafter Merkmale der Erfindung auf die Ansprüche sowie die nachfolgende Erläuterung der Zeichnung verwiesen, anhand der eine besonders bevorzugte Ausführungsform beschrieben wird.

Dabei zeigt die einzige Figur ein schematisiertes Blockschaltbild einer erfindungsgemäßen Anzeigevorrichtung in einem Kraftfahrzeug.

Das nicht näher dargestellte Kraftfahrzeug besitzt einen Betriebsschalter 1, welcher zum Start eines nicht dargestellten Fahrzeugmotors eingeschaltet und beim Stillsetzen des Fahrzeugmotors ausgeschaltet wird. Beispielsweise betätigt der Betriebsschalter 1 die Zündung des Motors. An einem Ausgang des Betriebsschalters sind beim Ein- und Ausschalten voneinander unterscheidbare Signale abgreifbar. Des weiteren besitzt das Kraftfahrzeug verschiedene Systeme 2 und 3, welche zusammen mit dem Fahrzeugmotor ein- und ausgeschaltet werden und bei Abweichung von einem Sollbetriebszustand an einem Ausgang ein entsprechendes Signal erzeugen. Die genannten Signale des Betriebsschalters 1 sowie der Systeme 2 und 3 werden einer Steuervorrichtung 4 zugeleitet, die eingangsseitig einer Anzeigevorrichtung 5 angeordnet ist. Diese Anzeigevorrichtung besitzt den Systemen 2 und 3 separat zugeordnete Signalgeber 6 und 7, welche von der Steuervorrichtung 4 betätigt werden.

Erfindungsgemäß arbeitet die Steuervorrichtung 4 wie folgt:

Sobald die Steuervorrichtung 4 vom Betriebsschalter 1 ein Einschaltsignal erhält, betätigt sie für eine begrenzte Zeit die Signalgeber 6 und 7, so daß deren Funktionsfähigkeit erkennbar wird.

Wenn eines der Systeme 2 oder 3 von seinem Sollbetriebszustand abweicht und ein entsprechendes Signal zur Steuervorrichtung 4 leitet, wird dieses Signal von der Steuervorrichtung 4 in einem Speicher 4' gespeichert.

Gegebenenfalls kann nun die Steuervorrichtung 4 kurzzeitig den Signalgeber 6 bzw. 7 für das jeweilige System 2 bzw. 3 betätigen.

Bei Erhalt eines Ausschaltsignales des Betriebsschalters 1 kann die Steuervorrichtung 4 den Speicher 4' überprüfen und bei dort gespeichertem Signal den jeweils zugeordneten Signalgeber 6 bzw. 7 zumindest für eine vorgegebene Zeitspanne betätigen.

Gegebenenfalls erfolgt die Betätigung der Signalgeber 6 bzw. 7 nach Erhalt des Ausschaltsignales vom Betriebsschalter 1 erst dann, wenn ein der Steuervorrichtung 4 und/oder der Anzeigevorrichtung 5 zugeordneter Schalter 8 manuell betätigt wird. Dies kann insbesondere dann vorteilhaft sein, wenn lediglich für Inspektionszwecke wünschenswerte Signale angezeigt werden sollen.

Der Speicher 4' kann automatisch und/oder willkürlich gelöscht werden, sobald nach Betriebsende des Fahrzeuges bzw. nach dem Ausschalten des Schalters 1 das jeweilige Signal angezeigt wurde.

## Patentansprüche

1. Anzeigevorrichtung für Systeme, insbesondere eines Kraftfahrzeuges, die bei vorgegebenen Betriebszuständen und/oder Abweichungen von einem Sollbetriebszustand ein Warn- oder Fehlersignal erzeugen, mit einer der Anzeigevorrichtung (5) vorgeschalteten Steuervorrichtung (4), die die vorgenannten Warn- bzw. Fehlersignale speichert,
**dadurch gekennzeichnet,**
**daß** die Steuervorrichtung (4) die Anzeigevorrichtung bei Erhalt eines bei einer Betriebsabschaltung des überwachten Systems oder Kraftfahrzeuges erzeugten Ausschaltsignales zumindest vorübergehend betätigt.

2. Anzeigevorrichtung nach Anspruch 1,
**dadurch gekennzeichnet,**
**daß** das Warn- bzw. Fehlersignal kurzzeitig unverzögert angezeigt wird.

3. Anzeigevorrichtung nach Anspruch 1 oder 2,
**dadurch gekennzeichnet,**
**daß** die Steuervorrichtung beim Einschalten eines Systems (2,3) bzw. beim Start des Kraftfahrzeuges die Anzeigevorrichtung (5) bzw. deren Signalgeber (6,7) kurzzeitig betätigt.

4. Anzeigevorrichtung nach einem der Ansprüche 1 bis 3,
**dadurch gekennzeichnet,**
**daß** die Steuervorrichtung (4) einen Speicher (4') für das Signal bzw. die Signale des Systems bzw. der Systeme (2,3) aufweist.

5. Anzeigevorrichtung nach Anspruch 4,
**dadurch gekennzeichnet,**
**daß** der Speicher (4') willkürlich und/oder nach Betätigung der Anzeigevorrichtung (5) bzw. der jeweiligen Signalgeber (6,7) automatisch löschbar ist.

## Claims

1. Display device in particular for systems in a motor vehicle, which in the event of predetermined operating conditions and/or deviations from a required operating condition, produce a warning or fault signal, with a control unit (4) connected before the display device (5), which stores the said warning or fault signal,
**characterised in that**
the control unit (4) actuates the display device at least transiently when it receives a switch-off signal produced when the operation of the monitored system or the vehicle is switched off.

2. Display device according to Claim 1,
**characterised in that**
the warning or fault signal is displayed for a short time without delay.

3. Display device according to Claims 1 or 2,
**characterised in that**
when a system (2, 3) is switched on or when the vehicle is started, the control unit actuates the display device (5) or its signal emitters (6, 7) for a short time.

4. Display device according to any of Claims 1 to 3,
**characterised in that**
the control unit (4) comprises a memory (4') for the signal or signals from the system or systems (2, 3).

5. Display device according to Claim 4,
**characterised in that**
the memory (4') can be cleared optionally and/or automatically after the display device (5) or its respective signal emitters (6, 7) have been actuated.

## Revendications

1. Dispositif d'affichage pour des systèmes, en particulier d'un véhicule automobile, qui, dans des états de fonctionnement prédéterminés et/ou en cas d'écarts par rapport à un état de fonctionnement de consigne, génèrent un signal d'avertissement ou de défaut, avec un dispositif de commande (4) branché en amont du dispositif d'affichage (5), qui mémorise les signaux d'avertissement ou de défaut précités,
**caractérisé en ce que**
le dispositif de commande (4) actionne le dispositif d'affichage, au moins temporairement, lors de la réception d'un signal généré lors d'une mise hors service du système ou dù véhicule automobile surveillé.

2. Dispositif d'affichage selon la revendication 1,
**caractérisé en ce que** le signal d'avertissement ou de défaut est affiché sans retard, pendant une brève durée.

3. Dispositif d'affichage selon la revendication 1 ou 2,
**caractérisé en ce que** le dispositif de commande actionne brièvement le dispositif d'affichage (5) ou son transducteur de signal (6,7), lors de la mise en service d'un système (2,3) ou au démarrage du véhicule automobile.

4. Dispositif d'affichage selon l'une des revendications 1 à 3, **caractérisé en ce que** le dispositif de commande (4) présente une mémoire (4') pour le signal ou les signaux du système ou des systèmes (2,3).

5. Dispositif d'affichage selon la revendication 4,
**caractérisé en ce que** la mémoire (4') est effaçable à volonté et/ou automatiquement après actionnement du dispositif d'affichage (5) ou du transducteur de signal (6,7) respectif.
